# EUROPEAN PATENT APPLICATION

(11) **EP 4 660 967 A1**
(43) Date of publication of application: **10.12.2025**
(21) Application number: 25176853.7
(22) Date of filing: 15.05.2025
(51) Int. Cl.: G06V 10/94, G06V 20/52, G06V 40/20

(54) **METHODS AND SYSTEMS FOR ENHANCING VIDEO ANALYTICS ACCURACY OF A VIDEO CAMERA**

(30) Priority: 06.06.2024 US 202418736047
(71) Applicant: Honeywell International Inc., Charlotte, NC 28202 (US)
(72) Inventor: BHATTACHARJEE, Arnab, Charlotte, 28202 (US); CHAURASIA, Jitendra S., Charlotte, 28202 (US); DATTA, Indranil, Charlotte, 28202 (US)
(74) Representative: Haseltine Lake Kempner LLP

(57) **Abstract**

A security camera is calibrated by capturing a video of a human moving about a scene. A motion detection algorithm is used to detect the human and a scene specific AI classifier model is trained. One or more AI models is applied to the video and an accuracy score for each of the AI models is determined. The AI model with the highest accuracy score is selected. Detected motion is classified as human or non-human using the scene specific AI classifier model and the selected best AI model. When the classification of the scene specific AI classifier model and the selected best AI model do not match, the selected best AI model is retrained at the remote server using a server hosted AI model as ground truth, and the retrained best AI Model is then sent from the remote server to the security camera for subsequent use.

## Description

### TECHNICAL FIELD

The present disclosure relates generally to video analytics, and more particularly to methods and systems for enhancing video analytics accuracy in a video camera.

### BACKGROUND

Security cameras may perform video analytics on the video captured by the camera to identify objects and/or events occurring in the field of view of the camera. In some cases, the video analytics may include applying a pre-trained artificial intelligence model to video captured by the camera. The same pre-trained artificial intelligence model may be included in each camera. What would be desirable are methods and systems for enhancing video analytics accuracy in a video camera.

### SUMMARY

The present disclosure relates generally to video analytics, and more particularly to methods and systems for enhancing video analytics accuracy in a video camera. Because security cameras are often deployed in various locations of a facility, the scene captured by each camera can be very different. For example, one camera may be used to surveil an outdoor location of a facility where the scene may include a fence, trees, rain, car traffic, sun, shadows, moon, stars and other outdoor features. Another camera may be used to surveil an indoor office location of the facility, wherein the scene may include cubicles, hallways, doors, lights and other indoor features. To accommodate this scenario, a scene specific video analytics model is initially trained. The scene specific video analytics model is then used to enhance the video analytics accuracy of the corresponding camera.

An example may be found in a method for training an Artificial Intelligence (AI) model hosted on a security camera of a security system. The illustrative method includes storing a plurality of AI models in the security camera and after the security camera is installed, calibrating the security camera with respect to a particular scene captured by the security camera. Calibrating the security camera includes capturing a calibration video of the particular scene with a human (e.g. the installer) moving about the particular scene, applying a motion detection algorithm to the calibration video to detect the human moving about the particular scene, training a scene specific AI classifier model that learns human features in the particular scene of the security camera based at least in part on the human moving about the particular scene detected by the motion detection algorithm, applying each of the plurality of AI models stored in the security camera to the calibration video to identify one or more corresponding events in the calibration video including one or more events that identify the movement of the human about the particular scene, determining an accuracy score for each of the plurality of AI models stored in the security camera, wherein the accuracy score for each of the plurality of AI models identifies how accurate the corresponding one of the plurality of AI models correctly identified the movement of the human about the particular scene using the human movement detected by the motion detection algorithm as a ground truth, identifying an AI model of the plurality of AI models that has a highest accuracy score, resulting in a best AI model, and selecting the best AI model for subsequent use. After the security camera is calibrated with respect to the particular scene, the method includes detecting motion in a video of the particular scene via the motion detection algorithm, classifying the detected motion as human or non-human using the scene specific AI classifier model, and classifying the detected motion as human or non-human using the selected best AI model. When the classification of the scene specific AI classifier model and the selected best AI model do not match, the method includes sending data including one or more images of the video of the particular scene and an identifier of the selected best AI model to a remote server, retraining the selected best AI model at the remote server using a server hosted AI model (e.g. a State of the Art AI model) as ground truth, and sending the retrained best AI Model from the remote server to the security camera for subsequent use.

Another example may be found in a security camera for capturing a video of a particular scene of a facility. The security camera includes a memory that stores a motion detection algorithm for detecting human movement (e.g. installer) in the video captured by the security camera, a scene specific AI classifier model that learns human features in the video of the particular scene using one or more characteristics of the human movement detected by the motion detection algorithm as a ground truth, and an AI model to identify one or more corresponding events in the video including one or more events that identify a human in the video. The security camera includes a controller. The controller is configured to capture a calibration video of the particular scene with a human moving about the particular scene, apply the motion detection algorithm to the calibration video to detect the human moving about the particular scene, train the scene specific AI classifier model to learns human features in the calibration video of the particular scene of the security camera using one or more characteristics of the human movement detected by the motion detection algorithm as ground truth, detect motion in a subsequent video of the particular scene via the motion detection algorithm, classify the detected motion in the subsequent video as human or non-human using the scene specific AI classifier model, classify the detected motion in the subsequent video as human or non-human using the AI model. When the classification of the scene specific AI classifier model and the AI model do not match, the controller is configured to send one or more images of the video of the particular scene and an identifier of the AI model to a remote server. The controller is configured to receive a retrained AI Model from the remote server for subsequent use.

Another example may be found in a non-transitory computer readable medium storing executable instructions thereon. When the executable instructions are executed by one or more processors, the one or more processors are caused to capture a calibration video of a particular scene with a human (e.g. installer) moving about the particular scene. The one or more processors are caused to apply a motion detection algorithm to the calibration video to detect the human moving about the particular scene. The one or more processors are caused to train a scene specific AI classifier model to learns human features in the calibration video of the particular scene using one or more characteristics of the human movement detected by the motion detection algorithm as ground truth. The one or more processors are caused to detect motion in a subsequent video of the particular scene via the motion detection algorithm. The one or more processors are caused to classify the detected motion in the subsequent video as human or non-human using the scene specific AI classifier model. The one or more processors are caused to classify the detected motion in the subsequent video as human or non-human using an AI model. When the classification of the scene specific AI classifier model and the AI model do not match, the one or more processors are caused to send one or more images of the subsequent video of the particular scene and an identifier of the AI model to a remote server. The one or more processors are caused to receive a retrained AI Model from the remote server for subsequent use.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative security camera;
Figures 2A, 2B, 2C and 2D are flow diagrams that together show an illustrative method for training an AI model;
Figures 3A and 3B are flow diagrams that together show an illustrative series of steps that may be carried out by one or more processors when the one or more processors execute executable instructions stored on a non-transitory computer-readable medium;
Figure 4 is a flow diagram showing an illustrative calibration phase;
Figure 5 is a flow diagram showing an illustrative monitoring phase; and
Figure 6 is a flow diagram showing an illustrative re-training phase.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

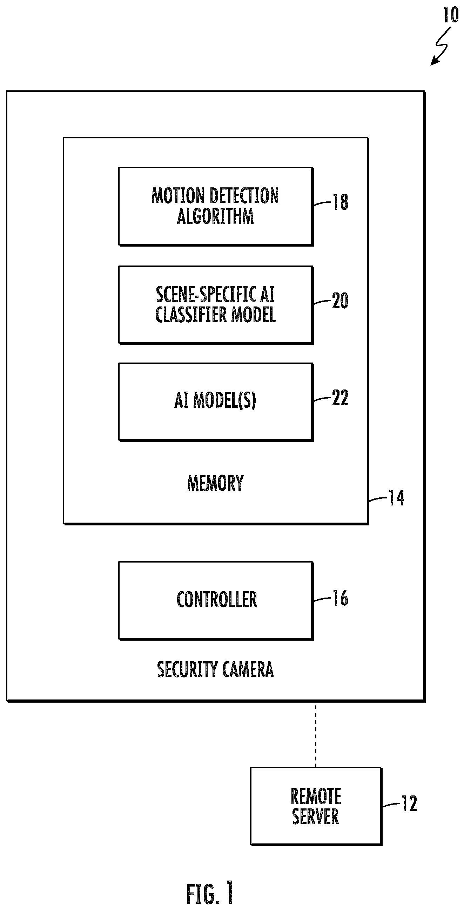

Figure 1 is a schematic block diagram showing an illustrative security camera 10. The illustrative security camera 10 may be a video camera, for example, or perhaps a still camera. The security camera 10 may be configured to capture a video. In some cases, the security camera 10 may communicate with a remote server 12. In some cases, the remote server 12 may host a video management system. In some cases, the remote server 12 may be involved in training AI models for the security camera 10. The security camera 10 includes a memory 14 and a controller 16. In some instances, the memory 14 may store a motion detection algorithm 18 for detecting human movement in the video captured by the security camera 10. The motion detection algorithm may include comparing the frames of the video with a reference frame, and identifying pixels of the video that have changed. Based on the nature of the pixels of the video that have changed, the motion detection algorithm may detect objects in the scene. In some cases, the motion detection algorithm may generate a bounding box for detected humans, wherein the bounding box follows the human as the human moves about the particular scene. The motion detection algorithm may also apply metadata to the bounding box moving about the particular scene, wherein the metadata includes one or more of a size of the bounding box, a speed of movement of the bounding box in the particular scene and a trajectory of movement of the bounding box in the particular scene.

The memory 14 may store a scene specific AI classifier model 20 that learns human features in the video of the particular scene captured by the security camera 10 using one or more characteristics of the human movement detected by the motion detection algorithm as a ground truth. The memory 14 may store an AI model 22 that is configured to identify one or more corresponding events in the video including one or more events that identify a human in the video. In some cases, the memory 14 may store a number of AI models 22.

The controller 16 is configured to capture a calibration video of the particular scene with a human (e.g. the installer) moving about the particular scene and to apply the motion detection algorithm 18 to the calibration video to detect the human moving about the particular scene. In some cases, to reduce the complexity of detecting human movement in the calibration video, the installer may walk around the scene while ensuring no other humans are walking around the scene. In some cases, applying the motion detection algorithm 18 to the calibration video to detect the human (e.g. installer) moving about the particular scene may include identifying one or more of a size of the human in the particular scene (and/or in various regions of the particular scene), a speed of movement of the human in the particular scene, a visual feature of the human in the particular scene, a shape of the human in the particular scene and a trajectory of the human in the particular scene. In some cases, applying the motion detection algorithm to the calibration video to detect the human (e.g. installer) moving about the particular scene may include applying a bounding box to the detected human, wherein the bounding box follows the human as the human moves about the particular scene. In some cases, applying the motion detection algorithm to the calibration video to detect the human moving about the particular scene may include associating metadata with the bounding box moving about the particular scene, wherein the metadata includes one or more of a size of the bounding box, a speed of movement of the bounding box in the particular scene and a trajectory of movement of the bounding box in the particular scene. These are just examples.

The controller 16 is configured to train a scene specific AI classifier model 20 to learn human features in the calibration video of the particular scene of the security camera 10 using one or more characteristics of the human movement detected by the motion detection algorithm 18 as ground truth. Once the scene specific AI classifier model 20 is trained, the controller 16 is configured to detect motion in a subsequent video of the particular scene via the motion detection algorithm 18, to classify the detected motion in the subsequent video as human or non-human using the scene specific AI classifier model 20. as well as to classify the detected motion in the subsequent video as human or non-human using the AI model 22. When the classification of the scene specific AI classifier model 20 and the AI model 22 do not match, the controller 16 is configured to send one or more images of the video of the particular scene and an identifier of the AI model 22 to the remote server 12. In some cases, the controller 16 may be configured to receive a retrained AI Model 22 from the remote server 12 for subsequent use.

In some cases, the memory 14 may store a plurality of AI models 22 each for identifying one or more corresponding events in the video including one or more events that identify a human in the video. The controller 16 may be configured to apply each of the plurality of AI models 22 stored in the memory 14 of the security camera 10 to the calibration video to identify one or more corresponding events in the calibration video including one or more events that identify the movement of the human about the particular scene. The controller 16 may be configured to determine an accuracy score for each of the plurality of AI models 22 stored in the memory 14 of the security camera 10, wherein the accuracy score for each of the plurality of AI models 22 identifies how accurate the corresponding one of the plurality of AI models 22 correctly identified the movement of the human about the particular scene using the human movement detected by the motion detection algorithm as a ground truth. The controller 16 may be configured to identify the AI model 22 of the plurality of AI models 22 that has a highest accuracy score, resulting in a best AI model, and to select the best AI model 22. The controller 16 may be configured to classify the detected motion of the subsequent video as human or non-human using the best AI model 22. When the classification of the scene specific AI classifier model 20 and the best AI model 22 do not match, the controller 16 is configured to send one or more images of the video of the particular scene and an identifier of the best AI model 22 to the remote server 12, and to receive the retrained best AI Model 22 from the remote server 12 for subsequent use.

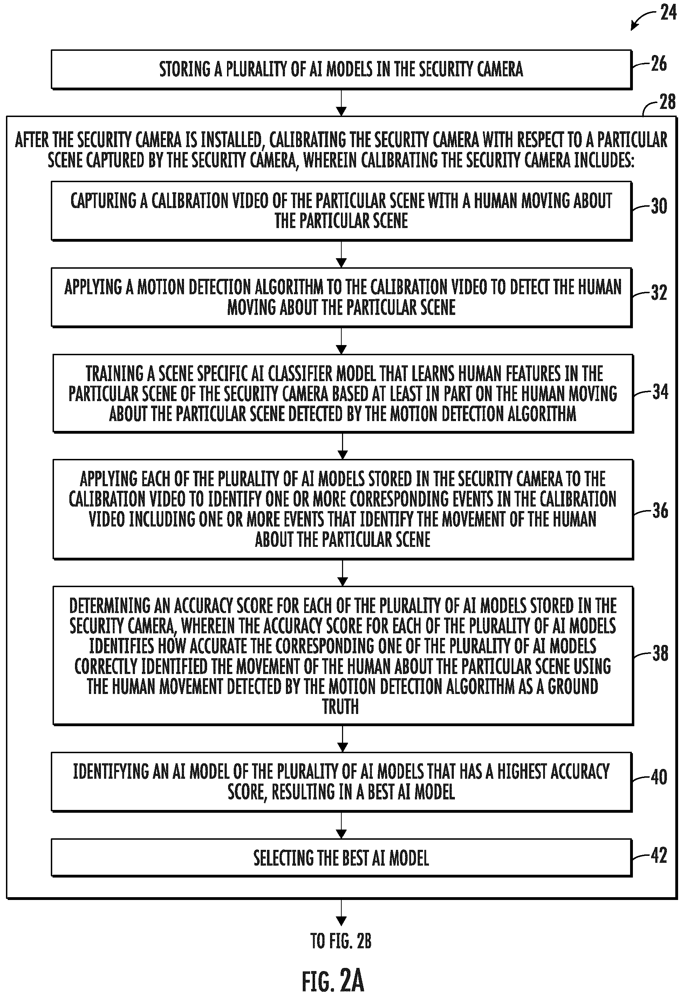

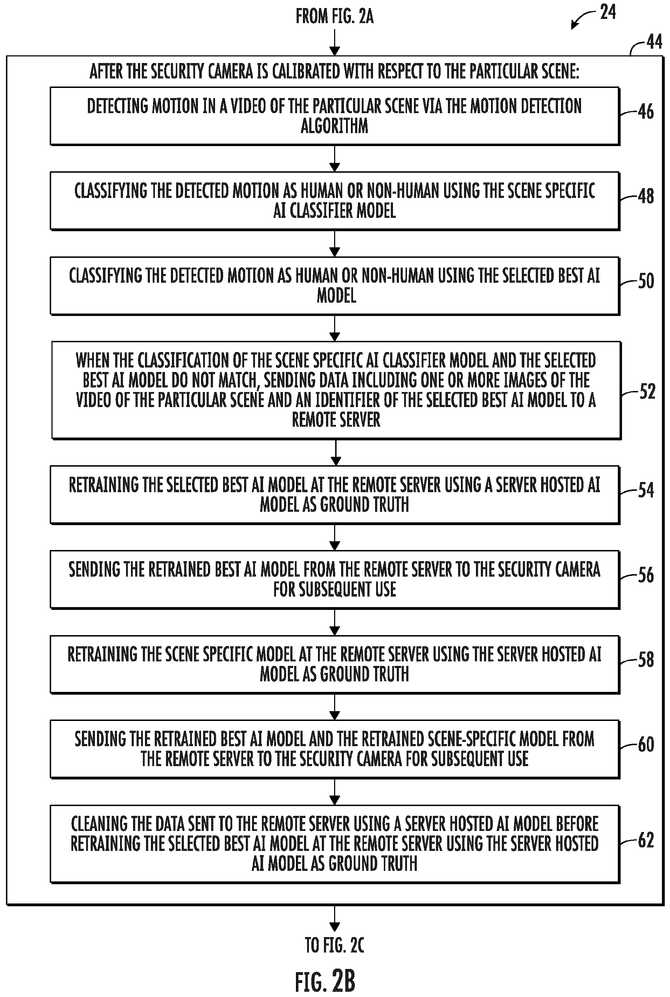

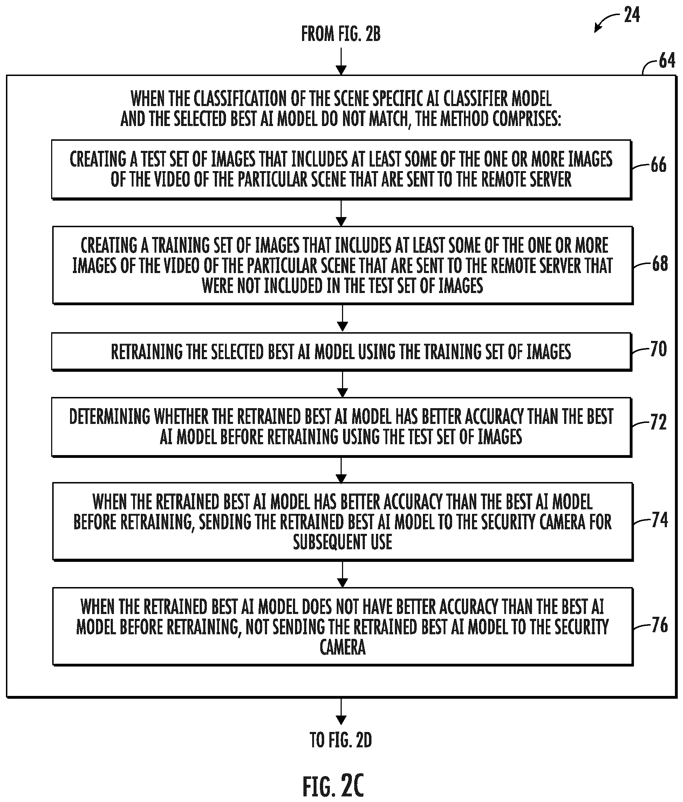

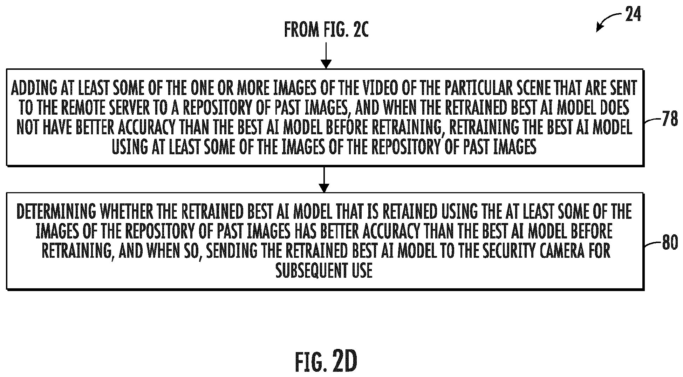

Figures 2A, 2B, 2C and 2D are flow diagrams that together show an illustrative method 24 for training an Artificial Intelligence (AI) model (such as the AI model 22) hosted on a security camera (such as the security camera 10) of a security system. The illustrative method 24 includes storing a plurality of AI models in the security camera, as indicated at block 26. After the security camera is installed at a facility by an installer, the security camera is calibrated with respect to a particular scene captured by the security camera, as indicated at block 28. Calibrating the security camera includes capturing a calibration video of the particular scene with a human (e.g. the installer) moving about the particular scene, as indicated at block 30. Calibrating the security camera includes applying a motion detection algorithm (such as the motion detection algorithm 18) to the calibration video to detect the human moving about the particular scene, as indicated at block 32.

In some cases, applying the motion detection algorithm to the calibration video to detect the human moving about the particular scene may include identifying one or more of a size of the human in the particular scene, a speed of movement of the human in the particular scene, a visual feature of the human in the particular scene, a shape of the human in the particular scene and a trajectory of the human in the particular scene. In some cases, applying the motion detection algorithm to the calibration video to detect the human moving about the particular scene may include generating a bounding box for the detected human, wherein the bounding box follows the human as the human moves about the particular scene, and applying metadata to the bounding box moving about the particular scene, wherein the metadata includes one or more of a size of the bounding box, a speed of movement of the bounding box in the particular scene and a trajectory of movement of the bounding box in the particular scene. These are just examples.

Calibrating the security camera includes training a scene specific AI classifier model (such as the scene specific AI classifier model 20) that learns human features in the particular scene of the security camera based at least in part on the human moving about the particular scene detected by the motion detection algorithm, as indicated at block 34. Calibrating the security camera includes applying each of the plurality of AI models stored in the security camera to the calibration video to identify one or more corresponding events in the calibration video including one or more events that identify the movement of the human about the particular scene, as indicated at block 36. Calibrating the security camera includes determining an accuracy score for each of the plurality of AI models stored in the security camera, wherein the accuracy score for each of the plurality of AI models identifies how accurate the corresponding one of the plurality of AI models correctly identified the movement of the human about the particular scene using the human movement detected by the motion detection algorithm as a ground truth, as indicated at block 38. Calibrating the security camera includes identifying an AI model of the plurality of AI models that has a highest accuracy score, resulting in a best AI model, as indicated at block 40, and selecting the best AI model, as indicated at block 42. In some cases, calibrating the security camera may include capturing the calibration video of the particular scene with a single human (e.g. the installer) moving about the particular scene.

Continuing on Figure 2B, after the security camera has been calibrated with respect to the particular scene, the method 24 includes additional steps, as indicated at block 44. The additional steps include detecting motion in a video of the particular scene via the motion detection algorithm, as indicated at block 46. The additional steps include classifying the detected motion as human or non-human using the scene specific AI classifier model, as indicated at block 48. The additional steps include classifying the detected motion as human or non-human using the selected best AI model, as indicated at block 50. When the classification of the scene specific AI classifier model and the selected best AI model do not match, the method 24 includes sending data including one or more images of the video of the particular scene and an identifier of the selected best AI model to a remote server, as indicated at block 52. The additional steps include retraining the selected best AI model at the remote server using a server hosted AI model (e.g. a State of the Art AI model) as ground truth, as indicated at block 54. The additional steps include sending the retrained best AI Model from the remote server to the security camera for subsequent use, as indicated at block 56.

In some cases, the additional steps may also include retraining the scene specific model at the remote server using the server hosted AI model (e.g. a State of the Art AI model) as ground truth, as indicated at block 58. The additional steps may include sending the retrained best AI Model and the retrained scene-specific model from the remote server to the security camera for subsequent use, as indicated at block 60. In some cases, the additional steps may include cleaning the data sent to the remote server using a server hosted AI model (e.g. a State of the Art AI model) before retraining the selected best AI model at the remote server using the server hosted AI model as ground truth, as indicated at block 62.

Continuing on Figure 2C, the method 24 may include a series of steps when the classification of the scene specific AI classifier model and the selected best AI model do not match, as indicated at block 64. The series of steps may include creating a test set of images that includes at least some of the one or more images of the video of the particular scene that are sent to the remote server, as indicated at block 66. The series of steps may include creating a training set of images that includes at least some of the one or more images of the video of the particular scene that are sent to the remote server that were not included in the test set of images, as indicated at block 68. The series of steps may include retraining the selected best AI model using the training set of images, as indicated at block 70. The series of steps may include determining whether the retrained best AI Model has better accuracy than the best AI Model before retraining using the test set of images, as indicated at block 72. When the retrained best AI Model has better accuracy than the best AI Model before retraining, the series of steps may include sending the retrained best AI Model to the security camera for subsequent use, as indicated at block 74. When the retrained best AI Model does not have better accuracy than the best AI Model before retraining, the series of steps may include not sending the retrained best AI Model to the security camera, as indicated at block 76. The scene specific model may be retrained in the same way.

In some cases, and continuing on Figure 2D, the method 24 may further include adding at least some of the one or more images of the video of the particular scene that are sent to the remote server to a repository of past images, and when the retrained best AI Model does not have better accuracy than the best AI Model before retraining, retraining the best AI model using at least some of the images of the repository of past images, as indicated at block 78. In some cases, the method 24 may further include determining whether the retrained best AI Model that is retained using the at least some of the images of the repository of past images has better accuracy than the best AI Model before retraining, and when so, sending the retrained best AI Model to the security camera for subsequent use, as indicated at block 80. The scene specific model may be retrained in the same way.

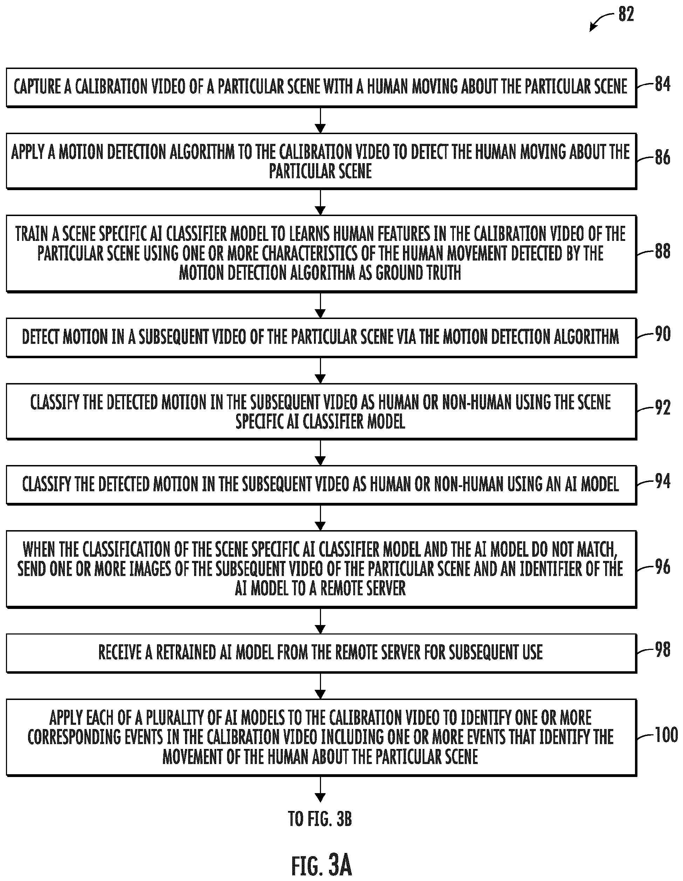

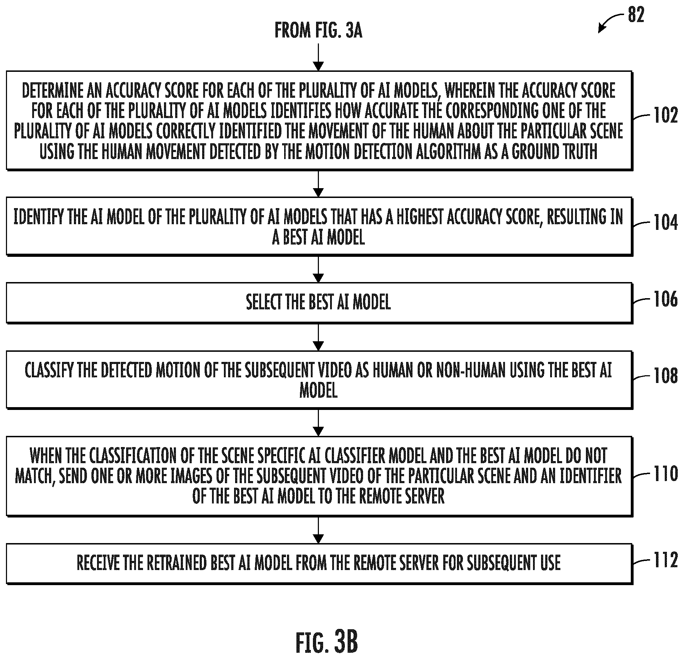

Figures 3A and 3B are flow diagrams that together show an illustrative series of steps 82 that may be carried out by one or more processors (such as one or more processors of the controller 16) when the one or more processors are executing executable instructions that can be stored on a non-transitory computer readable medium. The one or more processors are caused to capture a calibration video of a particular scene with a human (e.g. installer) moving about the particular scene, as indicated at block 84. The one or more processors are caused to apply a motion detection algorithm to the calibration video to detect the human moving about the particular scene, as indicated at block 86. The one or more processors are caused to train a scene specific AI classifier model to learns human features in the calibration video of the particular scene using one or more characteristics of the human movement detected by the motion detection algorithm as ground truth, as indicated at block 88. The one or more processors are caused to detect motion in a subsequent video of the particular scene via the motion detection algorithm, as indicated at block 90. The one or more processors are caused to classify the detected motion in the subsequent video as human or non-human using the scene specific AI classifier model, as indicated at block 92, and to classify the detected motion in the subsequent video as human or non-human using an AI model, as indicated at block 94. When the classification of the scene specific AI classifier model and the AI model do not match, the one or more processors are caused to send one or more images of the subsequent video of the particular scene and an identifier of the AI model to a remote server, as indicated at block 96. The one or more processors are caused to receive a retrained AI Model from the remote server for subsequent use, as indicated at block 98.

In some cases, the one or more processors may be caused to apply each of a plurality of AI models to the calibration video to identify one or more corresponding events in the calibration video including one or more events that identify the movement of the human about the particular scene, as indicated at block 100. Continuing on Figure 3B, the one or more processors may be caused to determine an accuracy score for each of the plurality of AI models, wherein the accuracy score for each of the plurality of AI models identifies how accurate the corresponding one of the plurality of AI models correctly identified the movement of the human about the particular scene using the human movement detected by the motion detection algorithm as a ground truth, as indicated at block 102. The one or more processors may be caused to identify the AI model of the plurality of AI models that has a highest accuracy score, resulting in a best AI model, as indicated at block 104, and to select the best AI model, as indicated at block 106. In some cases, the one or more processors may be caused to classify the detected motion of the subsequent video as human or non-human using the best AI model, as indicated at block 108. When the classification of the scene specific AI classifier model and the best AI model do not match, the one or more processors may be caused to send one or more images of the subsequent video of the particular scene and an identifier of the best AI model to the remote server, as indicated at block 110. The one or more processors may be caused to receive the retrained best AI Model from the remote server for subsequent use, as indicated at block 112. When the classification of the scene specific AI classifier model and the best AI model do match, the one or more processors may not send one or more images of the subsequent video of the particular scene and an identifier of the best AI model to the remote server.

In some cases, applying the motion detection algorithm to the calibration video to detect the human moving about the particular scene may include identifying one or more of a size of the human in the particular scene, a speed of movement of the human in the particular scene, a visual feature of the human in the particular scene, a shape of the human in the particular scene and a trajectory of the human in the particular scene. In some cases, applying the motion detection algorithm to the calibration video to detect the human moving about the particular scene may include generating a bounding box to the detected human, wherein the bounding box follows the human as the bounding box moves about the particular scene, and applying metadata to the bounding box moving about the particular scene, wherein the metadata includes one or more of a size of the bounding box, a speed of movement of the bounding box in the particular scene and a trajectory of movement of the bounding box in the particular scene.

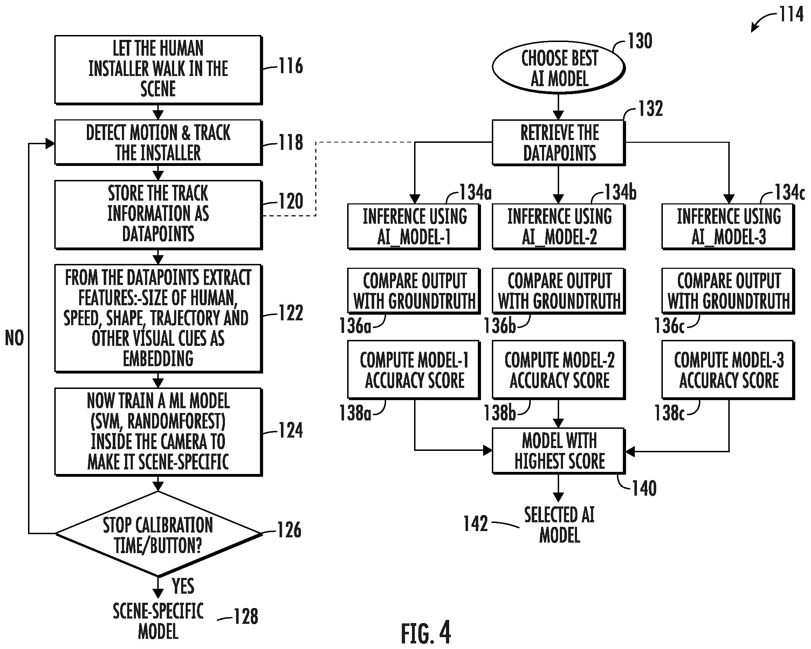

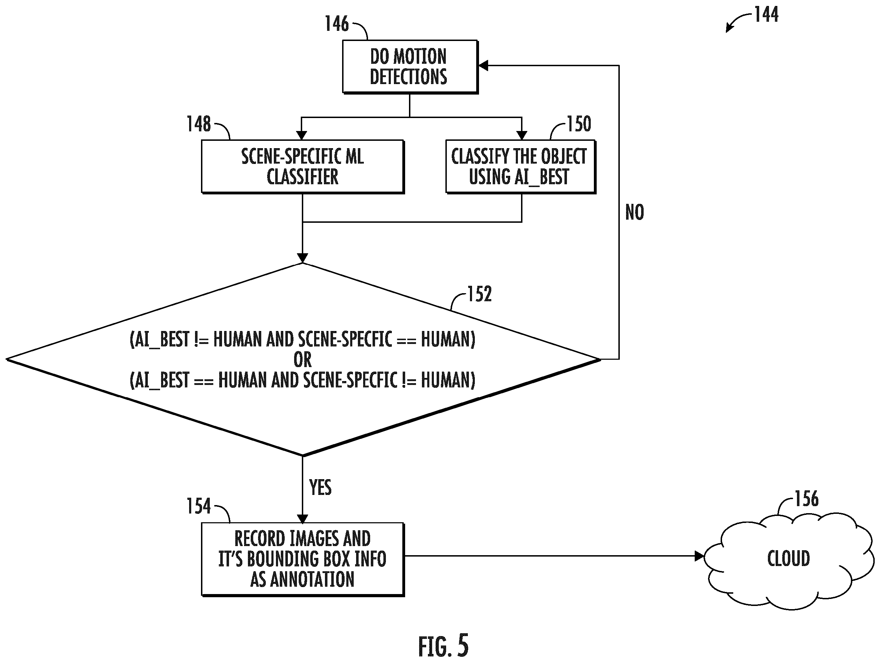

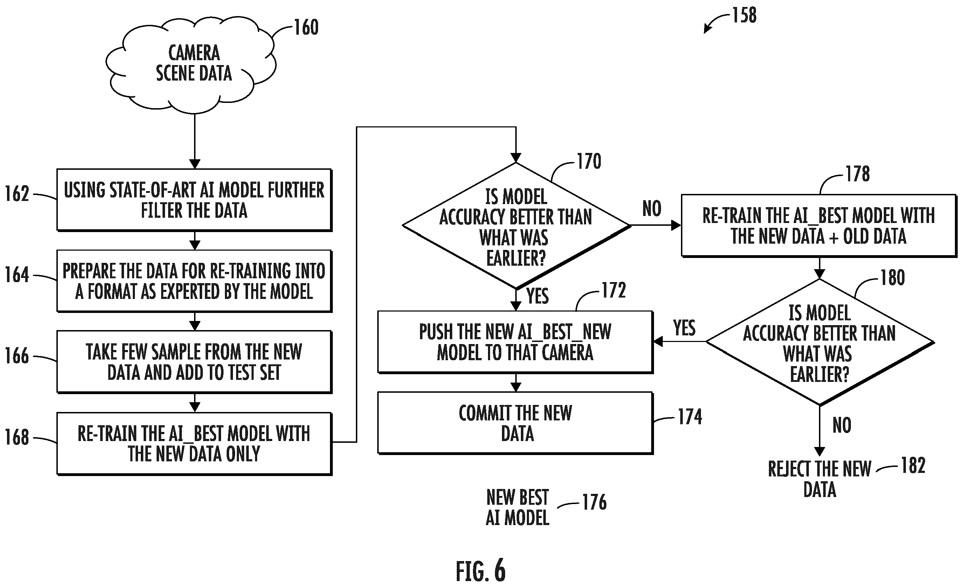

In some instances, retraining may include a calibration phase, a monitoring phase and a re-training phase. Figure 4 is a flow diagram providing an example of the calibration phase, Figure 5 is a flow diagram providing an example of the monitoring phase, and Figure 6 is a flow diagram providing an example of the re-training phase. Figure 4 shows a method 114 that begins with an installer walking in the scene while capturing a calibration video, as indicated at block 116. The motion is detected and the installer is tracked, as indicated at block 118. In some cases, motion detection includes looking for changing pixels. A bounding box may be drawn around the changing pixels, and the bounding box may be tracked over time. In the example of Figure 4, the track information is stored as data points, as indicated at block 120. Various features are extracted from the data points, as indicated at block 122. The extracted features are from a motion detection algorithm. An AI model within the camera is trained to make it scene-specific, as indicated at block 124. A determination is made at decision block 126 as to whether a calibration time has expired. If so, a scene-specific model has been created, as indicated at 128. If not, control reverts to block 118.

The method 114 also includes selecting a best AI model, starting at block 130. The data points stored at block 120 are retrieved, as indicated at block 132. A first AI model is tested using the retrieved data points, as indicated at block 134a. A second AI model is tested using the retrieved data points, as indicated at block 134b. A third AI model is tested using the retrieved data points, as indicated at block 134c. While three AI models are shown, it will be appreciated that any number of different AI models may be tested in this manner. The output from the first AI model is compared with a ground truth, such as the ground truth of the motion detection algorithm, at block 136a. The output from the second AI model is compared with the ground truth at block 136b. The output from the third AI model is compared with the ground truth at block 136c. An accuracy score for the first AI model, based on a comparison made at block 136a, is computed as indicated at block 138a. An accuracy score for the second AI model, based on a comparison made at block 136b, is computed as indicated at block 138b. An accuracy score for the third AI model, based on a comparison made at block 136c, is computed as indicated at block 138c. The AI model with the highest score is determined, as indicated at block 140. The AI model with the highest score is selected, as indicated at 142.

Figure 5 is a flow diagram providing an example of the monitoring phase 144. Motion detection is performed, as indicated at block 146. Output of the scene-specific model, as indicated at block 148, and output of the selected AI model, as indicated at block 150, are monitored. A determination is made as to whether the output of the scene-specific model differs from the output of the selected AI Model at a decision block 152. If not, control reverts to block 146. However, if there is a difference between the output of the scene-specific model and the output of the selected AI Model, control passes to block 154 and the images and corresponding bounding boxes are recorded, and are then forwarded to a cloud-based server, as indicated at block 156.

Figure 6 is a flow diagram providing an example of the re-training phase 158. Camera scene data is collected, as indicated at block 160. The data is cleaned, as indicated at block 162. The data is prepared, as indicated at block 164. The new data is sampled, as indicated at block 166. As an example, twenty (20) percent of the new data may be sampled and added to the previous test data. The AI model is retrained using the new data only, as indicated at block 168. A determination is made at decision block 170 as to whether the model accuracy has improved. If so, the new AI model is pushed to the security camera, as indicated at block 172. The new data is committed, as indicated at block 174, meaning that the new data is added to the old data, resulting in a larger set of old data. A new AI best model is determined, as indicated at 174. If the model accuracy did not improve, control passes to block 178 where the AI model is retrained using the new data and the old data. A determination is made at decision block 180 as to whether the model accuracy has improved. If so, control passes to block 172. If not, the new data is rejected, as indicated at 182.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for training an Artificial Intelligence (AI) model hosted on a security camera of a security system, the method comprising:
storing a plurality of AI models in the security camera;
after the security camera is installed, calibrating the security camera with respect to a particular scene captured by the security camera, wherein calibrating the security camera includes:
capturing a calibration video of the particular scene with a human moving about the particular scene;
applying a motion detection algorithm to the calibration video to detect the human moving about the particular scene;
training a scene specific AI classifier model that learns human features in the particular scene of the security camera based at least in part on the human moving about the particular scene detected by the motion detection algorithm;
applying each of the plurality of AI models stored in the security camera to the calibration video to identify one or more corresponding events in the calibration video including one or more events that identify the movement of the human about the particular scene;
determining an accuracy score for each of the plurality of AI models stored in the security camera, wherein the accuracy score for each of the plurality of AI models identifies how accurate the corresponding one of the plurality of AI models correctly identified the movement of the human about the particular scene using the human movement detected by the motion detection algorithm as a ground truth;
identifying an AI model of the plurality of AI models that has a highest accuracy score, resulting in a best AI model;
selecting the best AI model;
after the security camera is calibrated with respect to the particular scene:
detecting motion in a video of the particular scene via the motion detection algorithm;
classifying the detected motion as human or non-human using the scene specific AI classifier model;
classifying the detected motion as human or non-human using the selected best AI model;
when the classification of the scene specific AI classifier model and the selected best AI model do not match, sending data including one or more images of the video of the particular scene and an identifier of the selected best AI model to a remote server;
retraining the selected best AI model at the remote server using a server hosted AI model as ground truth; and
sending the retrained best AI Model from the remote server to the security camera for subsequent use.

2. The method of claim 1, wherein after the security camera is calibrated with respect to the particular scene, the method comprising:
retraining the scene specific model at the remote server using the server hosted AI model as ground truth; and
sending the retrained best AI Model and the retrained scene-specific model from the remote server to the security camera for subsequent use.

3. The method of claim 1, wherein after the security camera is calibrated with respect to the particular scene, the method comprising:
cleaning the data sent to the remote server using a server hosted AI model before retraining the selected best AI model at the remote server using the server hosted AI model as ground truth.

4. The method of claim 1, wherein when the classification of the scene specific AI classifier model and the selected best AI model do not match, the method comprises:
creating a test set of images that includes at least some of the one or more images of the video of the particular scene that are sent to the remote server;
creating a training set of images that includes at least some of the one or more images of the video of the particular scene that are sent to the remote server that were not included in the test set of images;
retraining the selected best AI model using the training set of images;
determining whether the retrained best AI Model has better accuracy than the best AI Model before retraining using the test set of images;
when the retrained best AI Model has better accuracy than the best AI Model before retraining, sending the retrained best AI Model to the security camera for subsequent use; and
when the retrained best AI Model does not have better accuracy than the best AI Model before retraining, not sending the retrained best AI Model to the security camera.

5. The method of claim 4, further comprising:
adding at least some of the one or more images of the video of the particular scene that are sent to the remote server to a repository of past images, and when the retrained best AI Model does not have better accuracy than the best AI Model before retraining, retraining the best AI model using at least some of the images of the repository of past images.

6. The method of claim 5, further comprising:
determining whether the retrained best AI Model that is retained using the at least some of the images of the repository of past images has better accuracy than the best AI Model before retraining, and when so, sending the retrained best AI Model to the security camera for subsequent use.

7. The method of claim 1, wherein applying the motion detection algorithm to the calibration video to detect the human moving about the particular scene includes identifying one or more of a size of the human in the particular scene, a speed of movement of the human in the particular scene, a visual feature of the human in the particular scene, a shape of the human in the particular scene and a trajectory of the human in the particular scene.

8. The method of claim 7, wherein applying the motion detection algorithm to the calibration video to detect the human moving about the particular scene comprises:
applying a bounding box to the detected human, wherein the bounding box follows the human as the human moves about the particular scene; and
applying metadata to the human moving about the particular scene, wherein the metadata includes one or more of a size of the bounding box, a speed of movement of the bounding box in the particular scene and a trajectory of movement of the bounding box in the particular scene.

9. The method of claim 1, wherein the calibrating the security camera includes capturing the calibration video of the particular scene with a single human moving about the particular scene.

10. A security camera for capturing a video of a particular scene of a facility, comprising:
a memory storing:
a motion detection algorithm for detecting human movement in the video captured by the security camera;
a scene specific AI classifier model that learns human features in the video of the particular scene using one or more characteristics of the human movement detected by the motion detection algorithm as a ground truth;
an AI model to identify one or more corresponding events in the video including one or more events that identify a human in the video;
a controller configured to:
capture a calibration video of the particular scene with a human moving about the particular scene;
apply the motion detection algorithm to the calibration video to detect the human moving about the particular scene;
train the scene specific AI classifier model to learns human features in the calibration video of the particular scene of the security camera using one or more characteristics of the human movement detected by the motion detection algorithm as ground truth;
detect motion in a subsequent video of the particular scene via the motion detection algorithm;
classify the detected motion in the subsequent video as human or non-human using the scene specific AI classifier model;
classify the detected motion in the subsequent video as human or non-human using the AI model;
when the classification of the scene specific AI classifier model and the AI model do not match, send one or more images of the video of the particular scene and an identifier of the AI model to a remote server; and
receive a retrained AI Model from the remote server for subsequent use.

11. The security camera of claim 10, wherein the memory stores a plurality of AI models each for identify one or more corresponding events in the video including one or more events that identify a human in the video, and wherein the controller is configured to:
apply each of the plurality of AI models stored in the memory of the security camera to the calibration video to identify one or more corresponding events in the calibration video including one or more events that identify the movement of the human about the particular scene;
determine an accuracy score for each of the plurality of AI models stored in the memory of the security camera, wherein the accuracy score for each of the plurality of AI models identifies how accurate the corresponding one of the plurality of AI models correctly identified the movement of the human about the particular scene using the human movement detected by the motion detection algorithm as a ground truth;
identify the AI model of the plurality of AI models that has a highest accuracy score, resulting in a best AI model;
select the best AI model;
classify the detected motion of the subsequent video as human or non-human using the best AI model;
when the classification of the scene specific AI classifier model and the best AI model do not match, send one or more images of the video of the particular scene and an identifier of the best AI model to the remote server; and
receive the retrained best AI Model from the remote server for subsequent use.

12. The security camera of claim 10, wherein applying the motion detection algorithm to the calibration video to detect the human moving about the particular scene includes identifying one or more of a size of the human in the particular scene, a speed of movement of the human in the particular scene, a visual feature of the human in the particular scene, a shape of the human in the particular scene and a trajectory of the human in the particular scene.

13. The security camera of claim 12, wherein applying the motion detection algorithm to the calibration video to detect the human moving about the particular scene includes applying a bounding box to the detected human, wherein the bounding box follows the human as the human moves about the particular scene.

14. The security camera of claim 13, wherein applying the motion detection algorithm to the calibration video to detect the human moving about the particular scene includes applying metadata to the human moving about the particular scene, wherein the metadata includes one or more of a size of the bounding box, a speed of movement of the bounding box in the particular scene and a trajectory of movement of the bounding box in the particular scene.

15. The security camera of claim 10, wherein the controller is configured to capture the calibration video of the particular scene with a single human moving about the particular scene.
